# DEMANDE DE BREVET EUROPEEN

(11) **EP 0 948 159 A1**
(43) Date de publication de la demande: **06.10.1999**
(21) Numéro de dépôt: 99400813.4
(22) Date de dépôt: 02.04.1999
(51) Int. Cl.: H04L 9/08

(54) **Procédé de transmission sécurisée à travers un réseau informatique tel que l'internet et équipement de transmission pour la mise en oeuvre du procédé**

(30) Priorité: 03.04.1998 FR 9804172
(71) Demandeur: SAGEM SA, 75116 Paris (FR)
(72) Inventeur: Cazin, Dominique, 92150 Suresnes (FR)
(74) Mandataire: Bloch, Gérard

(57) **Abrégé**

Au cours du procédé de transmission sécurisée d'informations utiles entre deux terminaux (1, 1'; 101, 101') à travers un réseau informatique de communication (200) de type Internet, le terminal de réception transmet au terminal d'émission une clé de chiffrement publique, à travers un autre réseau de communication, plus sûr que le réseau informatique, et en émission (1; 101), on chiffre les informations utiles (28; 128), à l'aide de cette clé publique, avant de les transmettre vers le terminal de réception (1'; 101'), à travers ledit réseau informatique (200), et, en réception (1'; 101'), on déchiffre (24'; 124') lesdites informations utiles.

## Description

Dans le domaine de la communication, la transmission d'informations sur un réseau informatique tel que l'Internet, est exposée à un risque de piratage, un tiers malveillant pouvant écouter de façon illicite les informations transmises sur l'Internet.

Pour le grand public, le réseau de l'Internet ne garantit pas suffisamment de confidentialité, il est en tout cas réputé moins sécurisé qu'un réseau téléphonique tel que, notamment, le réseau téléphonique commuté RTC ou le réseau numérique à intégration de services RNIS.

Il convient donc de sécuriser la transmission d'informations sur l'Internet et, de façon plus générale, sur tout réseau informatique du même type.

Une solution classique consiste à chiffrer les informations utiles, un message électronique par exemple, transmises sur l'Internet entre un émetteur et un récepteur. Dans ce cas, l'émetteur et le récepteur doivent également se communiquer des informations de chiffrement nécessaires pour déchiffrer les informations utiles.

Dans l'éventualité d'une écoute pirate, par un tiers sur l'Internet des informations utiles chiffrées, il convient d'éviter que le tiers puisse également écouter les informations de chiffrement qui lui permettraient de déchiffrer les informations utiles.

L'invention propose de résoudre ce problème.

A cet effet, l'invention concerne un procédé de transmission sécurisée d'informations utiles entre deux terminaux à travers un réseau informatique de communication de type Internet, dans lequel les deux terminaux étant reliés à un autre réseau de communication plus sûr que ledit réseau informatique de communication, on transmet de l'un à l'autre des terminaux, à travers ledit autre réseau de communication, des informations de chiffrement suivant lequel, en émission, on chiffre les informations utiles avant de les transmettre vers le terminal de réception, à travers ledit réseau informatique, et, en réception, on déchiffre lesdites informations utiles, caractérisé par le fait que le terminal de réception étant associé à une clé de chiffrement publique, on transmet celle-ci du termina! de réception au terminal d'émission, à travers ledit autre réseau de communication

Par les termes "informations de chiffrement" , on entend désigner des informations relatives au chiffrement, dans un sens large, qu'il s'agisse d'informations pour chiffrer les informations utiles, ou d'informations pour déchiffrer les informations utiles chiffrées, le chiffrement, au sens propre du terme, et le déchiffrement étant étroitement liés.

Le document WO 98 02991 (Seng) enseigne un procédé de transmission sécurisée d'informations entre deux équipements de communication, reliés à l'Internet et à un autre réseau de communication, plus sûr que l'Internet, dans lequel l'un des équipements transmet à l'autre équipement des informations confidentielles, telles qu'une clé de chiffrement, à travers l'autre réseau de communication, et les deux équipements se transmettent des informations chiffrées à l'aide de cette clé, à travers l'Internet.

Dans WO 98 02 991, la clé de chiffrement est une clé secrète et c'est tout naturellement qu'il y est enseigné de la transmettre par le réseau sécurisé. Or, dans l'invention de la présente demande, il s'agit d'une clé publique qui est néanmoins transmise par le réseau sécurisé, et non pas par un réseau qu'on peut également qualifier de public, avec un avantage considérable que la demanderesse a mis en évidence.

Bien que la clé de chiffrement soit publique, la demanderesse s'est aperçu qu'il existait un risque de piratage à la transmettre à travers l'Internet.

En effet, un tiers disposant lui-même d'une clé publique pourrait facilement intercepter la clé du terminal de réception lors de sa transmission, la remplacer par sa propre clé publique, puis, lors de la transmission des informations utiles du terminal d'émission au terminal de réception, intercepter les informations utiles chiffrées à l'aide de sa clé, les déchiffrer et enfin les chiffrer à nouveau avec la clé publique du terminal de réception avant de les retransmettre vers celui-ci. Le tiers pourrait ainsi réussir à pirater les informations utiles, subtilement, sans que les terminaux de s'en aperçoive.

Ainsi, dans Seng, on transmet une clé secrète par un réseau sécurisé, alors que dans l'invention de la présente demande on transmet une clé publique par un réseau sécurisé. Il n'est pas indifférent que la clé de Seng soit secrète. Il n'est pas permis de proclamer que Seng enseigne de transmettre n'importe quelle clé à travers un réseau sécurisé. La solution découlant de façon évidente de Seng, pour transmettre une clé publique était d'utiliser un réseau public, non sécurisé. Et l'invention de la présente est d'autant plus inventive par rapport à Seng qu'elle procure un avantage impossible à tirer de Seng. On peut même prétendre que l'invention de la présente demande est d'avoir apporter une solution à ce problème original de piratage présenté ci-dessus.

De préférence, les terminaux étant reliés à un réseau téléphonique, on transmet les informations de chiffrement à travers le réseau téléphonique.

La demanderesse a ainsi su tirer profit du réseau de communication plus sûr, et notamment du réseau téléphonique, pour sécuriser la transmission d'informations sur le réseau informatique, l'Internet par exemple.

En outre, pour pirater les informations utiles, il faut désormais écouter deux réseaux, et non plus un seul, ce qui diminuent fortement les risques de piratage.

L'invention sera mieux comprise à l'aide de la description suivante de différents modes de réalisation du procédé de transmission sécurisée de l'invention et de différentes formes de réalisation d'un équipement de transmission pour la mise en oeuvre du procédé, en référence au dessin annexé sur lequel:

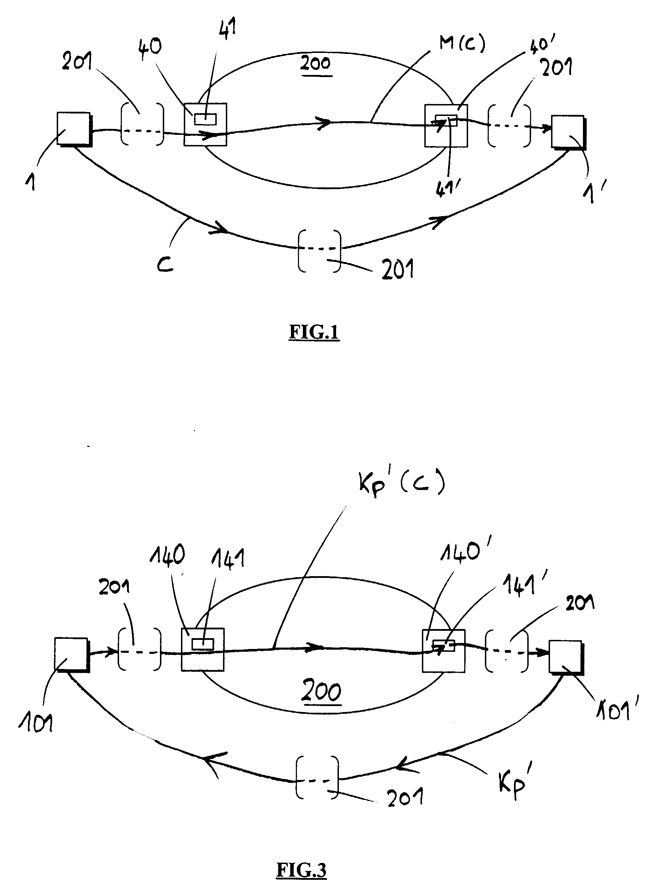

- la figure 1 représente un schéma simplifié du procédé de transmission de l'invention, selon un mode de réalisation particulier;
- la figure 2 représente un schéma bloc fonctionnel de l'équipement de transmission pour la mise en oeuvre du procédé de la figure 1;
- la figure 3 représente un schéma simplifié du procédé de transmission sécurisée selon un autre mode de réalisation et
- la Figure 4 représente un schéma bloc fonctionnel de l'équipement de transmission pour la mise en oeuvre du procédé de la figure 3.

La présente invention a pour objet de sécuriser la transmission d'informations à travers un réseau informatique, en l'espece l'Internet 200, entre deux terminaux, équipements de transmission, ici des télécopieurs 1 et 1', respectivement émetteur et récepteur desdites informations. Les deux télécopieurs 1, 1' disposent chacun d'un accès à l'Internet 200, ici par liaison téléphonique à travers le réseau téléphonique commuté RTC 201, d'une adresse électronique sur l'Internet 200, ainsi que d'une boîte à lettres 41, 41' de stockage de courriers électroniques, auprès d'un fournisseur 40, 40' d'accès à l'Internet 200. A la place du réseau RTC, on pourrait envisager de relier les télécopieurs au réseau numérique à intégration de services RNIS.

Les deux télécopieurs 1 et 1', dont l'un seul va maintenant être décrit, sont ici identiques. Par souci de clarté, les éléments du télécopieur émetteur 1 et les éléments correspondants du télécopieur récepteur 1' porteront les mêmes références respectivement non primées et primées.

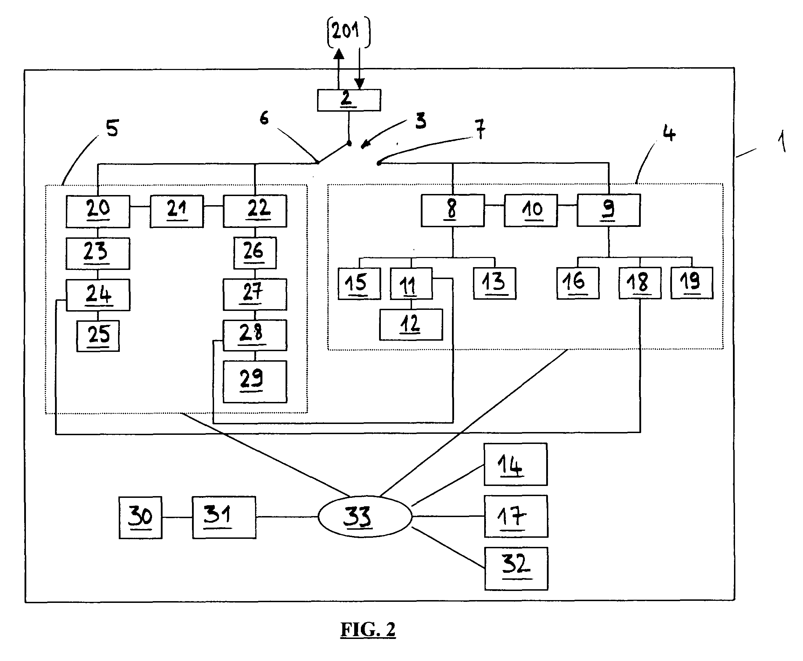

Le télécopieur 1, représenté sur la figure 2, comprend un bloc 2 de liaison au réseau RTC 201, avec un modem, un ensemble 4 de communication travers le réseau RTC 201 et un ensemble 5 de communication à travers l'Internet 200. Un commutateur 3, interposé entre le bloc de liaison téléphonique 2 et les ensembles 4 et 5, est destiné à relier le bloc 2 soit à l'ensemble 4 soit à l'ensemble 5.

L'ensemble 4 comprend un bloc d'émission 8 et un bloc de réception 9, tous deux reliés à un point 7 de connexion au commutateur 3 et à un bloc 10 d'exécution d'un protocole d'échange de capacités.

Le bloc d'émission 8 est relié à une mémoire 15 de stockage des capacités du télécopieur 1, une mémoire 13 de stockage de télécopies à émettre et une mémoire 11 de stockage, ici, de masques de chiffrement de courriers à émettre. La mémoire 11 est reliée à un bloc 12 destiné à créer des masques de chiffrement de courrier à émettre et à attribuer une référence à chacun de ces courriers.

Le bloc de réception 9 est relié à une mémoire 16 de stockage de télécopies reçues, à une mémoire 18 de stockage d' informations de chiffrement de courriers reçus et à une mémoire 19 de stockage des capacités de télécopieurs correspondants.

L'ensemble 5 comporte un bloc d'émission 22 et un bloc de réception 20, tous deux reliés à un point 6 de connexion au commutateur 3 et à un bloc 21 d'exécution d'un protocole de connexion téléphonique à l'Internet 200, en l'espèce le protocole PPP (point to point protocol - protocole point à point).

Un bloc 29 de préparation des courriers électroniques à émettre est connecté à un encodeur 27 destiné à encoder les courriers à émettre ici suivant le protocole MIME de communication sur l'Internet 200, avec interposition d'un bloc 28 prévu pour chiffrer les informations utiles contenues dans les courriers à émettre, et pour associer une référence à chacun de ces courriers. L'encodeur 27 est relié à une mémoire 26 de stockage des courriers à émettre. Le bloc 28 est également connecté à la mémoire 11 de stockage de masques de chiffrement et de références de courriers à émettre.

Le bloc de réception 20 est relié à un décodeur MIME 23 lui-même relié à un bloc 24 prévu pour lire la référence de chacun des courriers reçus, rechercher le masque de chiffrement, stocké dans la mémoire 18 et ayant une référence commune avec le courrier reçu, et déchiffrer le courrier reçu à l'aide de ce masque. Une mémoire 25 de stockage de courriers reçus est reliée au bloc 24. En outre, le bloc 24 est relié à la mémoire 18 de stockage des informations de chiffrement.

Le télécopieur 1 comprend en outre une mémoire 30 de stockage d'un répertoire de correspondants contenant les identités de télécopieurs correspondants, associées à des caractéristiques et capacités de ces télécopieurs (numéro d'appel téléphonique sur le réseau RTC, capacité pour communiquer à travers Internet, adresse Internet, capacité pour chiffrer les informations transmises à travers l'Internet et, éventuellement clé secrète de chiffrement...). Un bloc 31 de gestion du répertoire de correspondants est relié à la mémoire 30.

Structurellement, les mémoires 18, 19 et 30 appartiennent à un unique bloc mémoire.

Enfin, le télécopieur 1 comprend une unité centrale 33, de contrôle du télécopieur 1, auquel sont reliés tous les éléments du télécopieur qui viennent d'être décrits, ainsi qu'un ensemble d'interface homme-machine 32, un bloc d'impression 17 et un bloc 14 d'analyse d'image. L'ensemble 32 comporte, de façon classique, un écran de visualisation, un clavier de saisie, et des menus contextuels destinés s'afficher à l'écran afin de permettre à un utilisateur, à l'aide du clavier, de saisir des commandes d'exécution des différentes opérations du télécopieur 1.

Après la description structurelle et fonctionnelle du télécopieur 1, le procédé de transmission sécurisée d'un courrier électronique C, du télécopieur émetteur 1 au télécopieur récepteur 2, à travers l'Internet 200, va maintenant être décrit.

Lors d'une communication téléphonique quelconque préalable à la transmission du courrier C, ayant ici pour objet la transmission d'une télécopie entre les deux télécopieurs 1 et 1', ces derniers exécutent un protocole d'échange de capacités au cours duquel ils s'échangent, dans des trames de protocole, leurs capacités respectives à communiquer à travers l'Internet 200 et à sécuriser les communications sur l'Internet 200, ainsi que leurs adresses Internet.

Chacun des télécopieurs 1 (1') enregistre les capacités, l'adresse Internet et le numéro d'appel RTC, fourni par un service du réseau RTC 201, de l'autre télécopieur 1' (1) dans le répertoire de la mémoire 30.

En émission, afin de transmettre le courrier C au télécopieur récepteur 1', à travers l'Internet 200, le bloc 29 du télécopieur émetteur 1 prépare, de façon connue, le courrier électronique à transmettre C, sous la commande d'un utilisateur.

On rappelle ici que, sur l'Internet 200, les courriers électroniques comprennent un message, avec un en-tête et un corps, auquel est éventuellement rattaché, en pièce jointe, un fichier de données correspondant à une télécopie, par exemple. L'en-tête du message comprend notamment un champ de destination, contenant l'adresse électronique de destination du courrier, et un champ de provenance, contenant l'adresse électronique de provenance du courrier.

Le courrier préparé C contient ici, dans le champ de destination de son en-tête de message, l'adresse Internet du télécopieur récepteur 1', dans le champ de provenance, l'adresse Internet du télécopieur émetteur 1 et, en pièce jointe, un fichier de données correspondant à une télécopie, appelé fichier télécopie par la suite.

Le bloc 12 crée un masque de chiffrement M aléatoire et attribue au courrier C et au masque M une référence commune. Le masque M et la référence sont stockés dans la mémoire 11. On soulignera ici que les masques créés par le bloc 12 n'étant pas fixes mais aléatoires, ils sont différents pour chaque transmission à travers l'Internet 200, afin de sécuriser davantage la transmission.

A l'aide du masque M, le bloc 28 chiffre la pièce jointe du courrier C, le fichier télécopie, constituant les informations utiles du courrier. Le chiffrement consiste ici à superposer le masque M, comprenant une succession de bits à 1 et à 0, aux données du fichier. Puis, l'encodeur 27 encode le courrier C suivant le protocole MIME et le courrier est stocké dans la mémoire 26.

Sous la commande de l'utilisateur, le commutateur 3 établit la liaison entre le bloc 2 de connexion au réseau RTC 201 et l'ensemble 4, et le bloc d'émission 8 appelle le télécopieur 1' de façon ce que les deux télécopieurs 1 et 1' établissent une communication téléphonique à travers le réseau RTC 201.

Au cours de cette communication téléphonique, le télécopieur émetteur 1 transmet au télécopieur récepteur 1', à travers le réseau téléphonique 201, le masque M et la référence commune au masque M et au courrier C ainsi qu'une notification signalant au télécopieur 1' la transmission prochaine du courrier C .

En réception, sous la commande de l'appel téléphonique du télécopieur 1, le commutateur 3' établit la liaison entre le bloc 2' et l'ensemble 4'. Le bloc de réception 9' reçoit le masque M et la référence associée et les stocke dans la mémoire 18.

Puis, en émission, le télécopieur 1 interrompt la communication téléphonique avec le télécopieur 1' et, automatiquement, le commutateur 3 établit la liaison entre le bloc 2 et l'ensemble 5 de communication sur l'Internet. Le bloc 21 exécute le protocole PPP de connexion à l'Internet 200, en établissant une connexion téléphonique avec le fournisseur d'accès 40. Après connexion à l'Internet 200, le bloc d'émission 22 envoie le courrier C chiffré à l'aide du masque M, soit M(C), au télécopieur récepteur 1', avec la référence commune au masque M et au courrier C, à travers l'Internet 200.

En réception, le courrier chiffré M(C) est reçu et provisoirement stocké dans la boîte à lettres 41' du télécopieur récepteur 1'. Afin de télécharger le courrier notifié au télécopieur 1', sur commande de la notification reçue; le commutateur 3' établit, ici automatiquement, la liaison entre l'ensemble 5' et le bloc 2', le bloc 21' exécute le protocole de connexion téléphonique PPP à l'Internet 200, afin de connecter le télécopieur récepteur 1' au fournisseur d'accès 40' puis, après connexion, le bloc de réception 20 scrute périodiquement la boîte à lettre 41' jusqu'à télécharger le courrier C chiffré, avec la référence.

Le décodeur MIME 23' décode le courrier C chiffré.

Le bloc 24' lit la référence du courrier téléchargé, la compare aux références contenues dans la mémoire 18' et ladite référence étant associée au masque M dans la mémoire 18', utilise le masque M pour déchiffrer la pièce jointe du courrier. Le déchiffrement consiste à superposer au courrier C chiffré le masque M modulo deux, autrement dit à retrancher le masque M à M(C).

Afin de sécuriser la transmission, on transmet ainsi, du télécopieur émetteur 1 au télécopieur récepteur 1', les informations utiles chiffrées (la télécopie) à travers l'Internet 200, et les informations de chiffrement (le masque M pour le déchiffrement) à travers le réseau téléphonique 201 qui est plus sûr que le réseau de l'Internet 200.

Au lieu de transmettre le masque M, la référence du courrier C chiffré et la notification avant la transmission du courrier C chiffré, on pourrait également envisager de les transmettre après la transmission du courrier.

Il pourrait encore être prévu de chiffrer le masque M à l'aide d'une clé secrète de chiffrement Ks, fixe (autrement dit utilisée pour chiffrer toutes les informations utiles transmises entre les télécopieurs 1 et 1' à travers l'Internet 200), commune aux deux télécopieurs 1 et 1'et prédéfinie, transmise une seule fois de l'un à l'autre des télécopieurs 1, 1'.

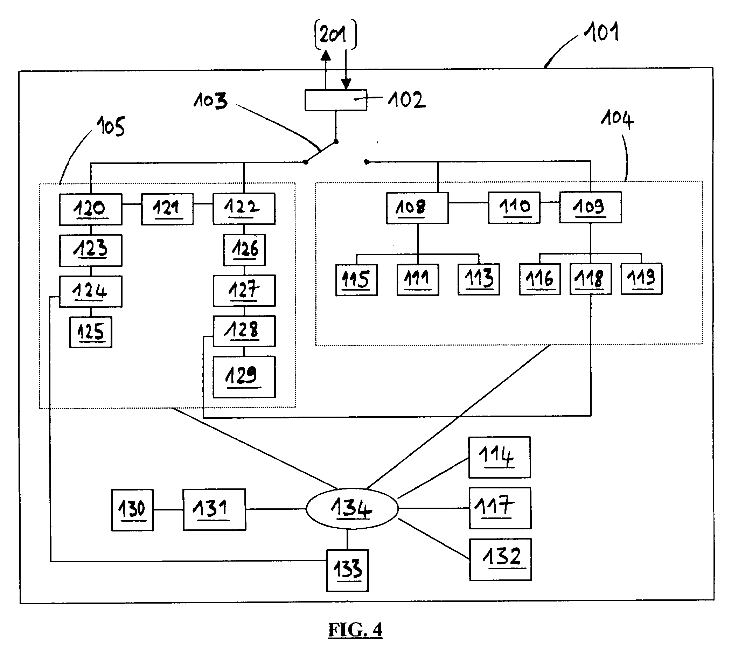

Une autre forme de réalisation des télécopieurs récepteur et émetteur et un autre mode de réalisation du procédé de transmission sécurisé ne diffèrent de la description précédente que par ce qui va maintenant être décrit (figures 3 et 4).

Par souci de clarté, les éléments des télécopieurs émetteur et récepteur 101, 101' de cette autre forme de réalisation portent les références des éléments correspondants des télécopieurs émetteur et récepteur 1, 1' de la forme de réalisation précédemment décrite, incrémentées de 100.

Dans ce mode de réalisation du procédé de transmission sécurisée à travers l'Internet 200, le télécopieur émetteur 101 chiffre les informations utiles à transmettre au télécopieur récepteur 101' à l'aide d'une clé publique de chiffrement Kp' associée au télécopieur récepteur 101'. Il s'agit d'une clé de chiffrement dont l'inverse Kp'⁻¹ est très difficilement déductible de Kp'.

Les deux télécopieurs 101 et 101' étant identiques, l'un seul va maintenant être décrit.

Le télécopieur 101, représenté sur la figure 4, comprend un ensemble 104 de communication à travers le réseau téléphonique RTC 201 et un ensemble 105 de communication à travers l'Internet 200, tous deux reliés à un bloc 102 de liaison au réseau téléphonique 201 par l'intermédiaire d'un commutateur 103.

L'ensemble 104 comprend un bloc de d'émission 108, un bloc de réception 109 et un bloc 110 d'exécution d'un protocole d'échange de capacités.

Une mémoire 115 de stockage des capacités du télécopieur 101, une mémoire 111 de stockage de la clé publique Kp du télécopieur 101 et une mémoire 113 de stockage de télécopies à émettre sont connectées au bloc d'émission 108. Le bloc de réception 109 est relié à une mémoire 116 de stockage de télécopies reçues, à une mémoire 118 de stockage de clés publiques de télécopieurs correspondants et à une mémoire 119 de stockage des capacités de télécopieurs correspondants.

L'ensemble 105 comprend un bloc d'émission 122, un bloc de réception 120 et un bloc 121 d'exécution d'un protocole de connexion téléphonique à l'Internet 200.

Le bloc de réception 120 est relié à un décodeur MIME 123, lui-même relié à une mémoire 125 de stockage des courriers reçus par l'intermédiaire d'un bloc de déchiffrement 124.

Le bloc d'émission 122 est connecté à une mémoire 126 de stockage de courriers à émettre, elle-même reliée à un bloc 129 de préparation des courriers à émettre, avec interposition d'un encodeur MIME 127 et d'un bloc de chiffrement 128.

Le télécopieur 101 comprend en outre une mémoire 130 de stockage d'un répertoire de correspondants relié à une unité centrale 134, avec interposition d'un bloc 131 de gestion du répertoire.

Structurellement, les mémoires 118, 119 et 130 appartiennent à un unique bloc mémoire.

Enfin, il est prévu une mémoire 133, connectée à l'unité centrale 134, de stockage de l'inverse Kp⁻¹ de la clé publique Kp associé au télécopieur 101.

Le bloc de déchiffrement 124 est relié à la mémoire 133 de stockage de l'inverse de la clé publique Kp⁻¹ et le bloc de chiffrement 128 à la mémoire 118 de stockage des clés publiques de correspondants.

Un bloc d'impression 117, un bloc d'analyse d'image 114 et un ensemble d'interface homme-machine 132 sont connectés à l'unité centrale 134.

Afin de sécuriser la transmission d'un courrier électronique contenant, en pièce jointe, un fichier télécopie, du télécopieur émetteur 101 au télécopieur récepteur 101', à travers l'Internet 200, le télécopieur émetteur 101 doit chiffrer le fichier télécopie à l'aide de la clé publique Kp' du télécopieur récepteur 101'.

Afin d'obtenir cette clé publique Kp', le télécopieur émetteur 101 établit une communication téléphonique avec le télécopieur récepteur 101', comme précédemment décrit, exécute un protocole d'échange de capacités (110) au cours duquel le télécopieur 101 demande au télécopieur 101' de lui transmettre sa clé publique Kp' à travers le réseau téléphonique 201.

Le télécopieur récepteur 101' transmet sa clé publique Kp' au télécopieur émetteur 101, à travers le réseau téléphonique RTC 201, et la clé Kp' est stockée dans la mémoire 118 du télécopieur 101.

Puis le télécopieur émetteur 101 prépare le courrier électronique à transmettre (129), chiffre (128) les informations utiles qu'il contient (le fichier télécopie) à l'aide de la clé publique Kp' du télécopieur récepteur 101' stockée dans la mémoire 118, encode (127) le courrier et le stocke dans la mémoire 126. Puis, le commutateur 103 relie l'ensemble 105 au bloc 102, le bloc 121 connecte le télécopieur 101 à l'Internet 200 et enfin le bloc d'émission 122 envoie le courrier vers la boîte à lettres 141' du télécopieur récepteur 101', à travers l'Internet 200.

En réception, le télécopieur récepteur 101' se connecte (121') à son fournisseur d'accès 140', télécharge (120') le courrier reçu depuis la boîte à lettres 141' et le décode (123'). Le bloc de déchiffrement 124' déchiffre les informations utiles du courrier téléchargé à l'aide de l'inverse de la clé publique Kp'⁻¹, stockée dans la mémoire 133', et stocke le courrier décodé et déchiffré dans la mémoire 125'.

Dans ce mode de réalisation, les informations de chiffrement, autrement dit la clé publique, sont transmises du télécopieur récepteur 101' au télécopieur émetteur 101, à travers le réseau téléphonique RTC 201, plus sûr que le réseau de l'Internet 200, ce qui diminue fortement le risque de piratage des informations utiles.

On pourrait également envisager que le télécopieur récepteur 101' transmette sa clé publique Kp' au télécopieur émetteur 101, lors d'un protocole d'échange de capacités, à l'occasion d'une communication téléphonique préalable quelconque entre les deux télécopieurs 101, 101', par exemple à l'occasion de la transmission d'une télécopie entre les deux télécopieurs 101, 101', à travers le réseau téléphonique 201. Par les termes "communication téléphonique quelconque", on entend désigner une communication téléphonique non spécifique à l'envoi de la clé publique, mais occasionnée pour la transmission d'autres données, une télécopie par exemple.

Bien sûr, dans une forme de réalisation préférée des télécopieurs, ces derniers sont agencés pour sécuriser les transmissions à travers l'Internet 200, soit par un mode de chiffrement utilisant le masque du télécopieur émetteur, soit par un mode de chiffrement utilisant la clé publique du télécopieur récepteur. Dans ce cas, les deux télécopieurs peuvent négocier au cours d'une communication téléphonique, le choix du mode de chiffrement.

Dans la description qui vient d'être faite, les deux télécopieurs communiquent par messagerie électronique, par boîtes à lettres interposées. On pourrait également envisager que les télécopieurs communiquent en temps réel, en duplex, à travers l'Internet, sans boîtes à lettres interposées.

## Revendications

1. Procédé de transmission sécurisée d'informations utiles entre deux terminaux (1, 1'; 101, 101') à travers un réseau informatique de communication (200) de type Internet, dans lequel les deux terminaux étant reliés à un autre réseau de communication (201) plus sûr que ledit réseau informatique de communication (200), on transmet de l'un à l'autre des terminaux, à travers ledit autre réseau de communication, des informations de chiffrement suivant lequel, en émission (1; 101), on chiffre les informations utiles (28; 128) avant de les transmettre vers le terminal de réception (1'; 101'), à travers ledit réseau informatique (200), et, en réception (1'; 101'), on déchiffre (24'; 124') lesdites informations utiles, caractérisé par le fait que le terminal de réception (101') étant associé à une clé de chiffrement publique (Kp'), on transmet celle-ci du terminal de réception (101') au terminal d'émission (101), à travers ledit autre réseau de communication (201).

2. Procédé selon la revendication 1, dans lequel les terminaux (1, 1'; 101, 101') étant reliés à un réseau téléphonique (201), on transmet les informations de chiffrement à travers un réseau téléphonique (201).

3. Procédé selon l'une des revendications 1 et 2, dans lequel on transmet la clé de chiffrement (Kp') au cours d'un protocole d'échange de capacités, à l'occasion d'une communication téléphonique quelconque entre les deux terminaux (101, 101').
